## Europäisches Patentamt

## European Patent Office

## Office européen des brevets

(11) Publication number: **0 048 979**
**B2**

(12) NEW EUROPEAN PATENT SPECIFICATION

(45) Date of publication of the new patent specification: **08.08.90**

(51) Int. Cl.⁵: **H 04 B 3/23**

(21) Application number: **81107650.4**

(22) Date of filing: **25.09.81**

(54) Echo canceller for a long-distance telephone network.

(30) Priority: **26.09.80 JP 134009/80**

(43) Date of publication of application:
**07.04.82 Bulletin 82/14**

(45) Publication of the grant of the patent:
**23.04.86 Bulletin 86/17**

(45) Mention of the opposition decision:
**08.08.90 Bulletin 90/32**

(84) Designated Contracting States:
**DE FR GB IT**

(56) References cited:
**FR-A-2 469 044**
**US-A-4 020 332**
**US-A-4 117 277**
**US-A-4 205 575**

**PHILIPS TECHNICAL REVIEW, vol. 39, no. 3/4, 1980, pages 102-117, Eindhoven (NL); P.J. VAN GERWEN et al.: "An integrated echo canceller for baseband data transmission"**
**PHILIPS TECHNICAL REVIEW.**

(73) Proprietor: **NEC CORPORATION**
**7-1, Shiba 5-chome Minato-ku**
**Tokyo 108-01 (JP)**

(72) Inventor: **Ito, Yoshinori**
**c/o NEC CORPORATION, 33-1, Shiba 5-chome**
**Minato-ku, Tokyo 108 (JP)**

(74) Representative: **Vossius & Partner**
**Siebertstrasse 4 P.O. Box 86 07 67**
**D-8000 München 86 (DE)**

(56) References cited:
**IEEE TRANSACTIONS ON ACOUSTICS, SPEECH AND SIGNAL PROCESSING, vol. ASSP-27, no. 6, December 1979, pages 768-781, New York (USA); N.A.M. VERHOECKX et al.: "Digital echo cancellation for baseband data transmission"**

**IEEE TRANSACTIONS ON ACOUSTICS, SPEECH AND SIGNAL PROCESSING.**

**IEEE TRANSACTIONS ON COMMUNICATIONS, vol. COM-25, no. 7, July 1977, pages 654-666, New York (USA); S.B. WEINSTEIN: "A passband data-driven echo canceller for full-duplex transmission on two-wire circuits"**

Courier Press, Leamington Spa, England.

EP 0 048 979 B2

# EP  0 048 979  B2

(56) References cited:
CONFERENCE RECORD, 1978 NATIONAL
TELECOMMUNICATIONS CONFERENCE, vol. 2,
3rd-6th December 1978, pages 21.2.1 - 21.2.7,
Birmingham (USA); P.T. NIELSEN et al.: "A
digital hybrid for two-wire digital subscriber
loops"

THE INTERNATIONAL SYMPOSIUM ON
SUBSCRIBER LOOPS AND SERVICES, 15th-19th
September 1980, pages 1-4, (Hand out at the
Symposium), Münich (DE); B.O. JUSTNES: "A
transmission principle for the digital subscriber
loop"

FOURTH INTERNATIONAL CONFERENCE ON
DIGITAL SATELLITE COMMUNICATIONS, 23rd-
25th October 1978, pages 219-224, Montreal
(CA); T. ARASEKI et al.: "A microprocessor echo
canceller"

PATENTS ABSTRACTS OF JAPAN, vol. 6, no. 52,
7th April 1982, page 930 E-100;

## Decription

The present invention relates to an echo canceller for speech signal transmission for eliminating undesirable echo appearing in a long-distance telephone network and, more particularly, to an echo canceller suited for a long-distance digitized telephone network where the incoming and outgoing digital signals have mutually different sampling rates.

It is well known that a hybrid circuit connecting a two-wire circuit to a long-distance four-wire circuit in such a telephone network cannot provide an echo-free coupling between the transmission and reception paths of the four-wire circuit, the reason for this being a part of the incoming signal supplied to the reception path of the four-wire circuit is leaked to the transmission-side path through the hybrid circuit, causing the so-called talker's echo at the other end of the long-distance four-wire circuit.

An example of such an echo canceller is shown in U.S.—A—4 064 379. The proposed echo canceller is based on the total digitization of the signal to be processed, thereby to produce a replica of the echo signal used for the cancellation of the true echo.

Generally, in such a long-distance telephone network, the master clock sources disposed at both ends of the four-wire circuit are subjected to frequency fluctuation, with the result that the timings of the sampling pulses produced by the counting-down of the master clock pulses differ from each other. For this reason, the proposed echo canceller in which no attention is paid to the above-mentioned frequency fluctuation, is not suited for the accurate echo cancellation between the talker's echo and an estimated echo.

US—A—4 117 277 describes an arrangement for simultaneous two-way data transmission over two-wire circuits. The arrangement comprises an echo canceller with an adaptive filter for producing from transmit channel signals appoximated echo signals which are differentially combined with receive channel signals for forming substantially echo-free residual signals. The echo canceller comprises an elastic storage device functioning as a buffer in order to adjust the phase difference between the clock signal recovered in an extraction circuit and the clock signal derived from a terminal station.

The articles by P. J. van Gerwen et al, titled "An integrated echo canceller for baseband data transmission", Philips Technical Review, vol. 30, no. 3/4, 1980, pp. 102—117, N.A.M. Verhoeckx et al, titled "Digital echo cancellation for baseband data transmission", IEEE Transactions on Acoustics, Speech and Signal Processing, vol. ASSP-27, no. 6, December 1979, pp. 768—781, and S. B. Weinstein, titled "A passband data-driven echo canceller for full-duplex transmission of two-wire circuits", IEEE Transactions on Communications, vol. COM-25, no. 7, July 1977, pp. 654—666, describe the use of an interpolating filter to resolve difficulties resulting from phase and frequency offsets in echo cancellers.

An object of the present invention is, therefore, to provide an echo canceller which is free from the disadvantages in the prior art, and provides an accurate echo cancellation without needing an elastic store.

The invention is characterised by the features of claims 1 and 2.

The invention will be described in greater detail in conjunction with the accompanying drawings, wherein:

Fig. 1 is a block diagram of a first embodiment of the invention;

Figs. 2A to 2D are diagrams for describing the so-called sample interpolation process;

Fig. 3 is a diagram for illustrationg in detail a sample interpolator for use in the embodiment;

Fig. 4 shows a table for describing the operation of a part of the circuit illustrated in Fig. 3;

Fig. 5A to 5I show diagrams of waveforms for describing the operation of the circuit shown in Fig. 3;

Fig. 6 is a diagram of a modification of the circuit of Fig. 3;

Fig. 7 is a diagram for showing a part of the circuit shown in Fig. 6;

Figs. 8A to 8P and Figs. 9A to 9P show diagrams of waveforms for describing the operation of the circuit shown in Fig. 6;

Fig. 10 is a block diagram of a second embodiment;

Fig. 11 is a detailed diagram of a part of the second embodiment; and

Figs. 12A to 12L show a diagram of waveforms for describing the operation of the circuit shown in Fig. 11.

In the drawings, identical structural elements are depicted by identical numerals.

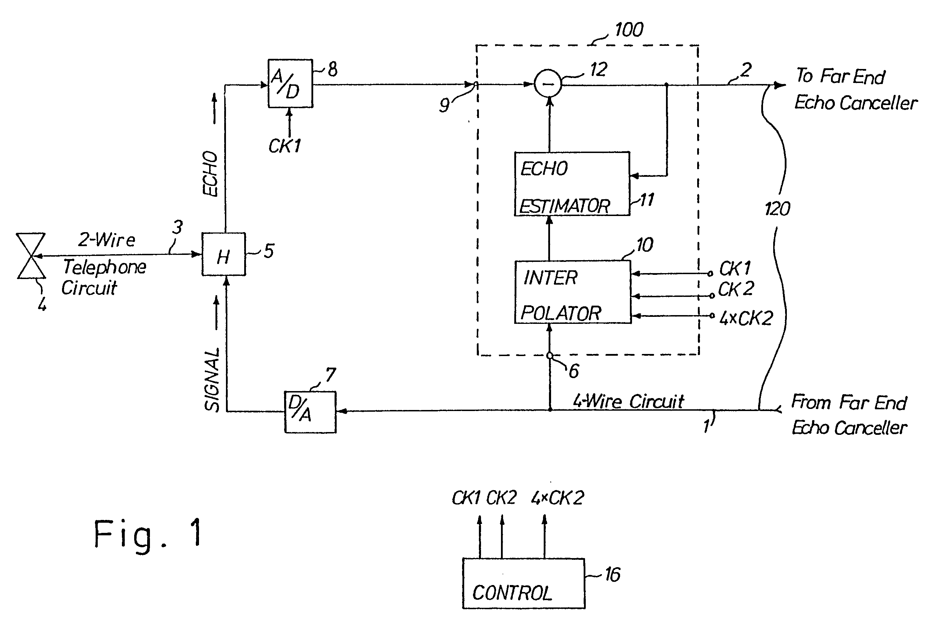

Referring to Fig. 1, a long-distance telephone network to which the present invention is applicable has a local two-wire circuit 3 connected to a subscriber set 4, a long-distance four-wire circuit 120 made of a submarine cable or a communication satellite link, and a hybrid circuit 5 for coupling these two-wire and four-wire circuits 3 and 120 to each other.

To the signal reception side of the hybrid circuit 5 is connected a digital-to-analog (D/A) converter 7 for decoding the incoming digitized telephone signal supplied through the circuit 120. Similarly, to the signal transmission side of the hybrid circuit 5 is connected an analog-to-digital (A/D) converter 8 for digitizing an analog speech signal supplied from the subscriber set 4.

The output of the A/D converter 8 is transmitted to the long-distance four-wire circuit 120 through an echo canceller 100 of the present invention to which the outgoing digital signal and the incoming digital signal are supplied through terminals 9 and 6, respectively. A timing pulse generator 16 is also provided for providing sampling pulses CK1 and CK2 to the A/D converter 8 and the echo canceller 100.

It should be noted that there is provided at the other end of the long-distance telephone network a combination of the 2-wire and four-wire circuits and the echo canceller identical to the one described above.

The echo canceller 100 has a sample interpolator 10 for converting the sampling rate of the incoming digital signal into another sampling rate preset for the signal digitization at the A/D converter 8 for transmission. For this purpose, the so-called interpolation process is employed. The output of the sample interpolator is supplied to an echo estimator 11 for producing an estimated echo signal, i.e., a replica of the incoming signal, which causes the talker's echo when transmitted back to the other end of the four-wire circuit 120. A subtractor 12 is also provided for subtracting the estimated echo signal from the outgoing digital signal. For details of the subtractor 12 and the echo estimator 11, reference is made to Fig. 1 of U.S.—A—4 064 379. Stated in more detail, the output of the A/D converter 113, the subtractor 114, the output of the A/D converter 105, and the output of the register 111 shown in Fig. 1 of the above-mentioned U.S. Patent correspond to the terminal 9, the subtractor 12, the input of the estimator, and the output of the estimator 11 of the present invention, respectively.

It is to be noted that, in the present echo canceller, parallel-bit processing is done by the use of serial-to-parallel converters (not shown) provided at the input and output terminals of the canceller.

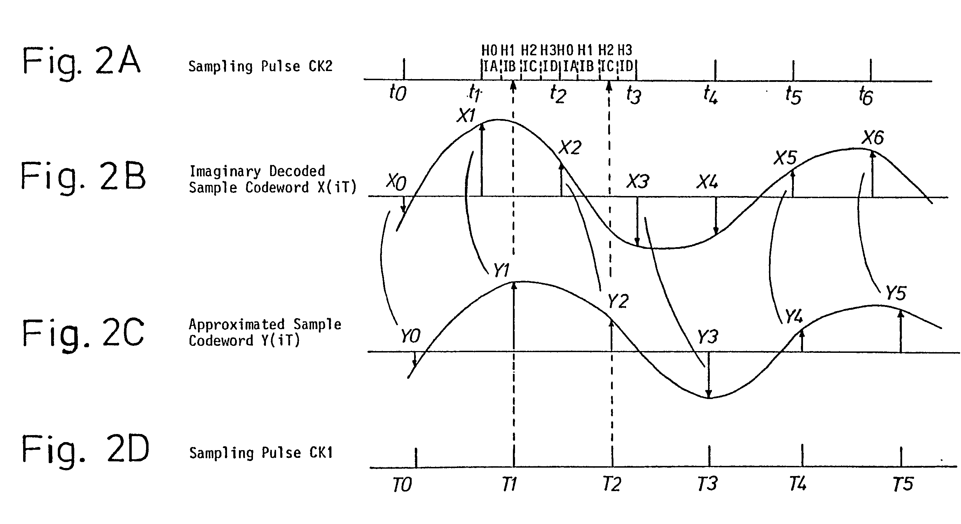

Referring to Fig. 2B, time-sequential codewords, which constitute the incoming digital signal supplied to the echo canceller 100 and respectively represent the signal samples digitized at the other end of the four-wire circuit 120 in response to a sampling pulse CK2 (Fig. 2A), are shown as imaginary decoded samples X0, X1, X2, . . . X6, . . . with an imaginary envelope. As will be seen in Figs. 2A and 2B, the samples X0, X1, X2, . . ., X6 . . . correspond to the sampling timing t0, t1, t2, . . . t6 . . . which are defined by a clock pulse source disposed at the other end of the long-distance four-wire circuit.

Meanwhile, the telephone signal supplied from the subscriber set 4 for transmission from this end of the four-wire circuit 120 is digitized at the A/D converter 8 in response to another sampling pulse CK1 (Fig. 2D) which has timings T0, T1, T2, . . . T6, . . . The leaked portion of the incoming signal applied to the A/D converter 8 is also sampled by the sampling pulse CK1 together with the outgoing telephone signal. On the other hand, to cancel out the leaked portion of the incoming signal at the subtractor 12, the estimated echo signal must be in timed relationship with the outgoing digital signal. However, since the incoming digital signal having the sampling timings t0, t1, t2, . . ., t6 tends to be out of synchronism with that for the outgoing digital signal, the estimated echo signal does not necessarily reflect a faithful simulation of the leaked portion of the incoming signal, making the echo cancellation difficult.

To overcome this problem, the present invention relies on the so-called sample interpolation process, in which the sample codewords X0, X1, X2, . . . and X6 . . . are translated to approximated sample codewords Y0, Y1, Y2, . . . Y6 . . . timed with the sampling pulse CK1.

The simplest process to achieve such sample interpolation is to obtain the sample codewords Y0 to Y5 at the timings T0 to T5 by the use of the sample codewords X0 to X5. Briefly stated, under this signal processing, the sample codeword Y1, for example, positioned between the timings t1 and t2 can be obtained using the sample codewords X1 and X2. Similarly, the sample codeword Y2 can be obtained using the sample codewords X2 and X3. Such sample interpolation is achieved with a digital filter having a group of filter coefficients. For details of such sample interpolation, reference is made to an article by Ronald W. Schafer et al., titled "A Digital Signal Processing Approach to Interpolation," Proceeding of the IEEE, Vol. 61, No. 6, June issue 1973, pp. 692—702.

However, with the filter having only one group of filter coefficients as shown in the Schafer article, values to be interpolated are limited in prescribed positions between the sampling timing (for instance, intermediate points between the adjacent sampling timings). As a result, such a filter cannot achieve the accurate sample interpolation.

In contrast, the sample interpolator used in the present invention can achieve more accurate sample interpolation in the following manner;

(1) Each of the intervals of the sampling pulse CK2 is divided into N (a positive integer) segments, each of which corresponds to a group of filter coefficients;

(2) Each value to be interpolated at each timing of the sampling pulse CK1 is obtained using such a coefficient group allotted to one of the N segments appearing at the timing of the sampling pulse CK1.

Stated in more detail, as illustrated in Fig. 2A, each interval of the sampling pulse CK2 is divided into four segments IA, IB, IC and ID (N=4), and plural filter coefficient groups H0 to H3 are allotted to IA to ID, respectively. Since, at the sampling timing T1, the segment IB appears, the coefficient group H1 is used to produce the sample codeword Y1 to be interpolated. Similarly, the coefficient group H2 is used to obtain the sample codeword Y2 to be interpolated at the sampling timing T2.

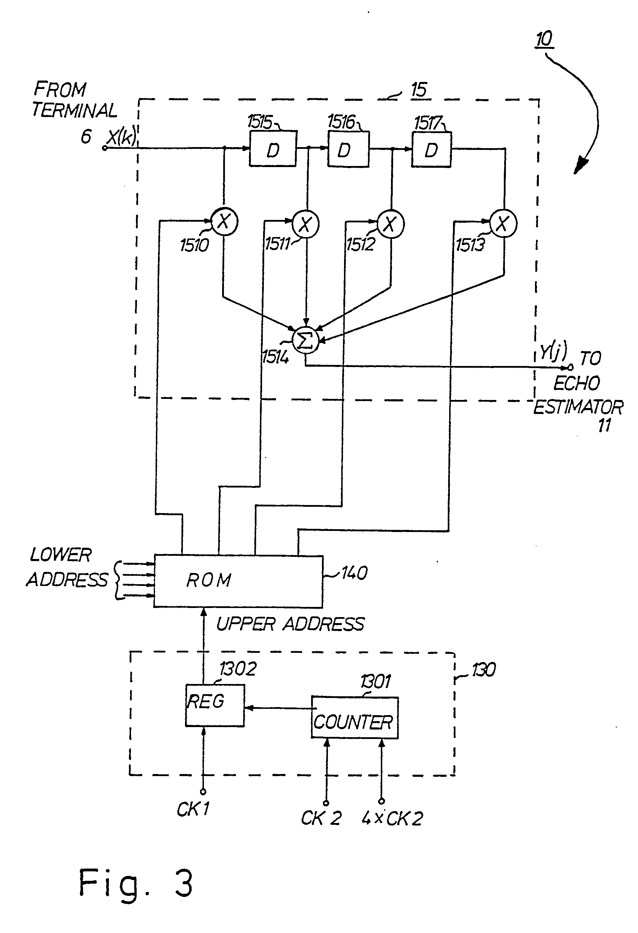

Referring to Fig. 3, the sample interpolator 10 shown in Fig. 1 comprises a transversal filter 15 having an input terminal for receiving the incoming digital signal through the terminal 6 and an output terminal connected to the estimator 11, a read-only memory (ROM) 140 for storing the four coefficient groups of the filter 15, and an address generator 130 for generating an address for accessing the ROM 140. The filter 15 consists of three delay elements 1515 to 1517, four multipliers 1510 to 1513, and an adder 1514 for adding up the outputs of the multipliers 1510 to 1513. The generator 130 is made up of a counter 1301 and a register 1302. The counter 1301 cle₂red by the

sampling pulse CK2 performs the counting-up operation by a timing pulse 4×CK2 having the repetition cycle four times as fast as that of the sampling pulse CK2. The register 1302 stores the output of the counter 130 in response to the sampling pulse CK1 to give an upper address for the ROM140. Lower addresses "00", "10", "01" and "11" (corresponding to 0, 1, 2, and 3 in decimal notation) are fixedly given to the ROM140 as constant values.

The operation of the interpolator of Fig. 3 will be described below in detail referring to Figs. 1, 4, and 5.

Hereunder decimal values represented by symbol " " are supposed to be given in binary form.

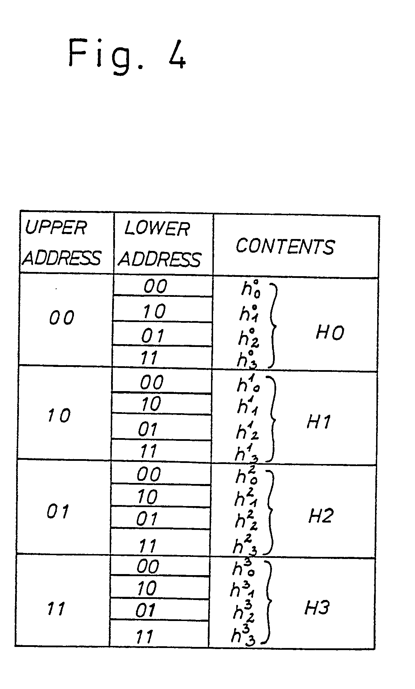

Fig. 4 shows typical filter coefficient groups. In this drawing, a specific one of coefficient groups H0 to H3 is designated by a corresponding one of upper addresses "0" to "3", while coefficients, or contents of the coefficient group designated are given using the lower address "0" to "3".

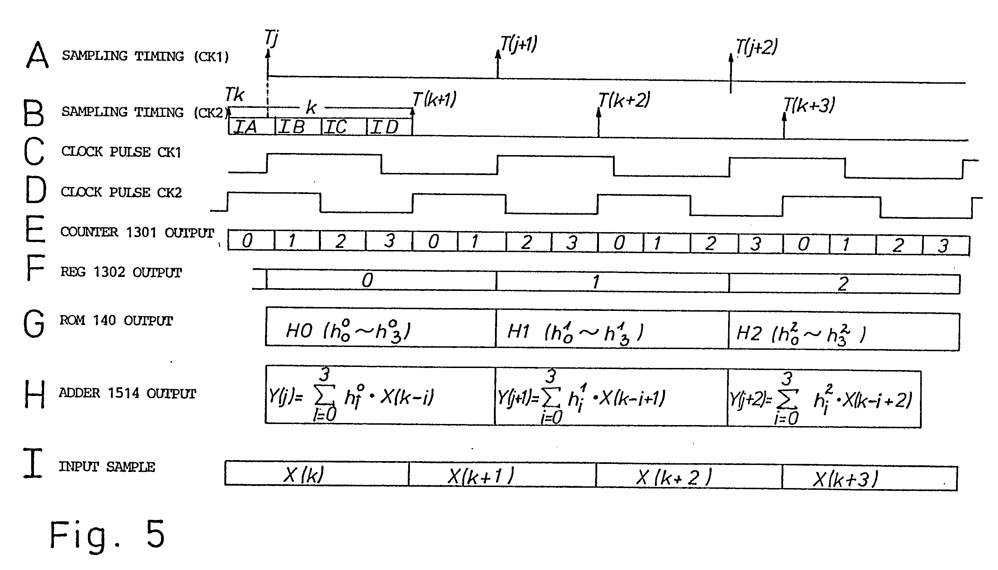

Fig. 5 shows a timed relationship between the sampling times in synchronism with sampling pulses CK1 and Ck2 and the outputs of the main structural elements of Fig. 3.

As shown in Fig. 5, the sampling timing Tj (Fig. 5A) in synchronism with the outgoing digital signal with the sampling pulse CK1 (Fig. 5c) lies in the segment IA of a sampling interval k (Fig. 5B) in synchronism with the incoming digital signal with the sampling pulse CK2 (Fig. 5D). Under this state, since the register 1302 shown in Fig. 3 stores the output "0" (Fig. 5F) of the counter 1301 in response to the sampling pulse CK1, an upper address "0" is given to the ROM140 to produce the coefficient group H0 (Fig. 4). At this time, since the lower addresses "0" to "3" are fixedly supplied to the ROM140, the ROM140 gives the coefficient $h_0^0$ to $h_3^0$ (Fig. 5G) to the multipliers 1510 to 1513.

On the other hand, a sample codeword X(k) (Fig. 5I) fed to the terminal 6 at the timing Tk (Fig. 5B) is applied to the multiplier 1510. Similarly, sample codewords X(k-1), X(k-2), and X(k-3), which were supplied to the terminal 6 at sampling timings T(k-1), T(k-2), and T(k-3) preceding the present timing Tk, are given to the multipliers 1511 to 1523 through the delay elements 1515 to 1517, respectively. The coefficients $h_0^0$ to $h_3^0$ are multiplied by the sample codewords X(k) to X(k-3) in the multipliers 1510 to 1513, respectively, and then added at the adder 1514 (See Fig. 3), to provide the sample codeword Y(j) (Fig. 5H) to be interpolated.

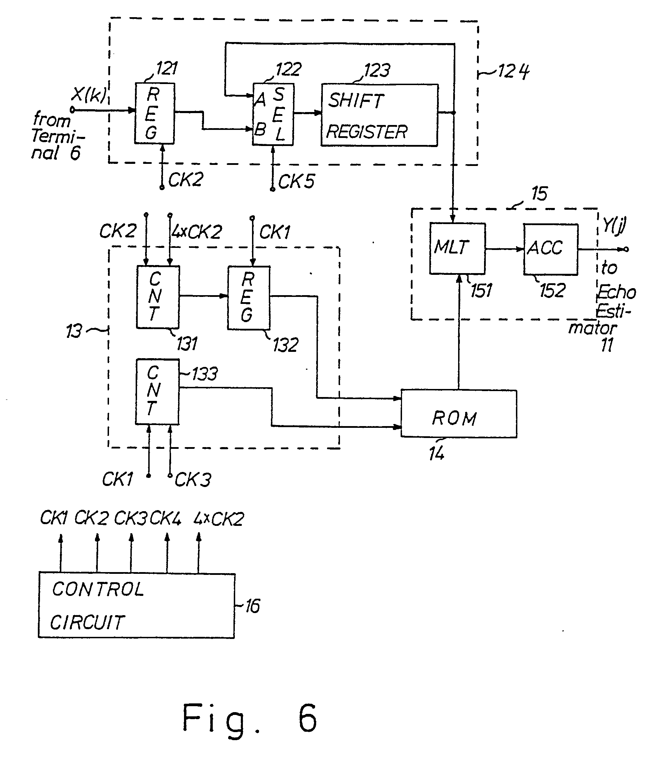

Referring to Fig. 6, another example of the interpolator 10 shown in Fig. 1 is composed of a digital filter 15 having a multiplier 151 and an accumulator 152, a coefficioent circuit 14 made up of a read-only memory (ROM) for storing the coefficients of the filter 15, a circuit 124 for supplying sample codewords to the digital filter 15, an address generator 13 for producing address for accessing the coefficient circuit 14, and a timing pulse generator 16 for generating pulses to control these circuits 124, 13, and 15. The circuit 124 further comprises a register 121 for storing input sample codewords in response to the sampling pulse CK2, a selector 122 for receiving the output of the register 121 at an input terminal B and the output of the register 121 at an input terminal B and the output of a shift register 123 at an input terminal A to select either the register 121 or the shift register 123 with a timing pulse CK5, and the four-stage shift register 123 for sequentially shifting the output of the selector 122 in response to timing pulses CK3 and CK4. On the other hand, the address generator 13 includes counters 131 and 133, and a register 132. The counter 131 and the register 133 perform the same operations as those in the counter 1301 and register 1302 shown in Fig. 3, respectively. After a predetermined value is set in the counter 133 by the sampling pulse CK1, the counting-down operation of the counter 133 is done starting from that value in response to the timing pulse CK3.

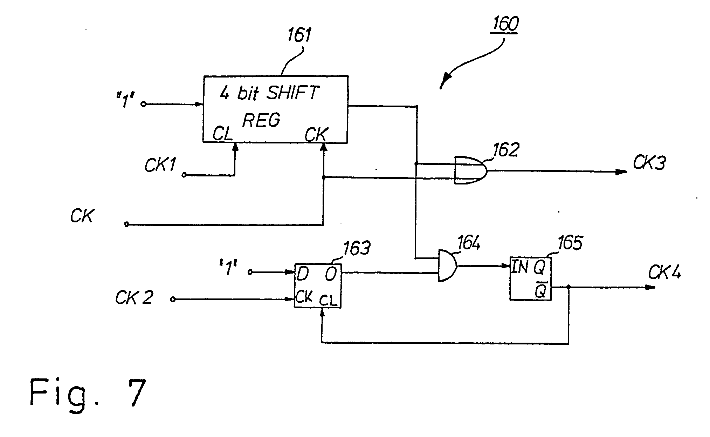

Referring to Fig. 7, a part 160 of the timing pulse generator 16 consists of a four-stage shift register 161, an OR gate 162, a delayed-type flip-flop 163, an AND gate 164, and a monostable multivibrator 165 so as to generate the timing pulses CK3 and CK4. The shift register 161 has a clear terminal CL for receiving a leading edge of the sampling pulse CK1 and an input terminal for receiving "1". The OR gate 162 produces a logical sum of the output of the register 161 and the input sampling pulse CK1 is set in the flip-flop 163 with the sampling pulse CK2. The AND gate 164 produces a logical product of the output of the flip-flop 163 and that of the register 161. The multivibrator 165 inverts the output of the gate 164.

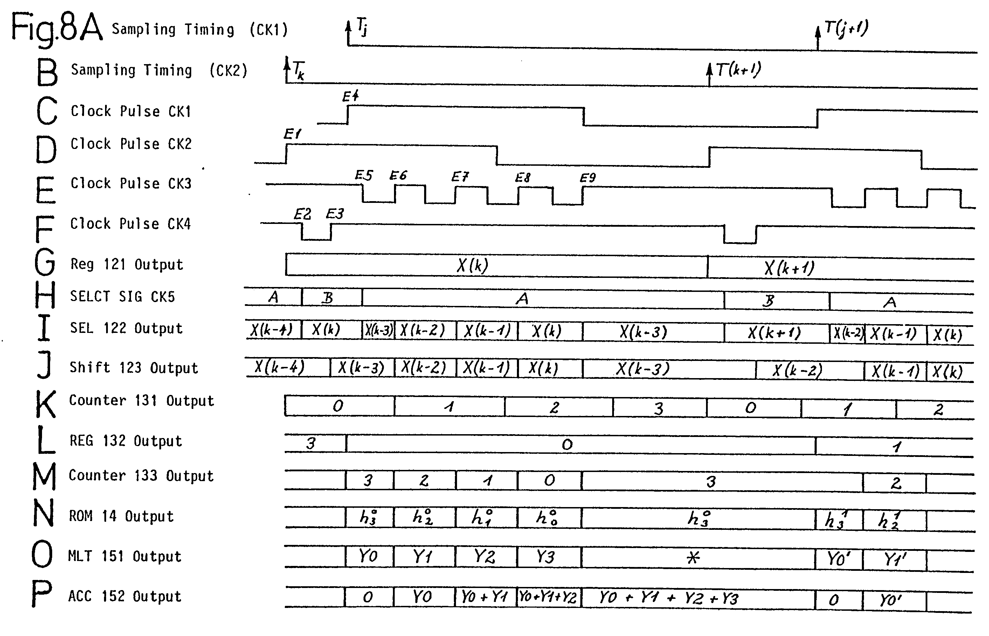

Figs. 8A to 8P show diagrams for describing the operation of the sample interpolator shown in Fig. 6. This operation will be described in detail hereunder referring to Figs. 6 to 8 under the state where the positional relationship between the sampling timings Tj (Fig. 8A) and Tk (Fig. 8B) is the same as that in Fig. 5.

The sample codeword X(k) (Fig. 8G) fed to the terminal 6 is stored in the register 122 at the leading edge E1 of the sampling pulse CK2 (Fig. 8D). At this time, in the register 123 are stored sample codewords X(k-4), X(k-3), X(k-2), and X(k-1), which were respectively given to the terminal 6 at sampling timings T(k-4), T(k-3), T(k-2), and T(k-1) preceding the present timing Tk. At the edge E1, an initial value "0" (Fig. 8K) is set in the counter 131. The selector 122 is then switched at the trailing edge E2 (Fig. 8F) to supply the output X(k) of the register 121 to the register 123. However, the output (Fig. 8J) of the register 123, to which neither the timing pulse CK3 (Fig. 8E) nor the timing pulse CK4 (Fig. 8F) is supplied, remains in X(k-4). At the leading edge E3, the register 123 stores the output X(k) of the register 121 and at the same time gives the sample codeword X)k-3) to the multiplier 151.

Next, at the leading edge E4 of the sampling pulse CK1 (Fig. 8C), "3" (Fig. 8L) is set in the counter 133 as the initial value. Further, at this edge E4, the register 132 stores the output "0" of the counter 131, and on the other hand, the accumulator 152 is restored to its initial state (Fig. 8P). The output "0" (Fig. 8L) of the register 132 and the output "3" (Fig. 8M) of the counter 133 are given to the coefficient circuit 14 as an upper address and a lower address, respectively. Upon reception of the upper and lower addresses, the coefficient circuit 14 produces the coefficient $h_3^0$ (Fig. 8N) (see the table shown in Fig. 4) to be sent to the multiplier 151. The sample codeword X(k-3) multiplied by the coefficient $h_3^0$ at the multiplier 151 is given to the accumulator 152 as the product Y0 (Fig. 8O).

At the trailing edge E5 of the timing pulse CK3, the selector 122 selects the terminal A in response to a selection signal CK5 (Fig. 8H) from the circuit 16. Since the counter 133 gives a lower address "22" to the coefficient circuit 14 at the leading edge E6 of the timing pulse CK3, the coefficient circuit 14 feeds the coefficient $h_2^0$ to the multiplier 151. Further, at this leading edge E6, the register 123 gives the sample codeword X(k-2) to the multiplier 151, so that the sample codeword (X(k-2) multiplied by the coefficient $h_2^0$ at the multiplier 151 is fed to the accumulator 152 as the product Y1. The accumulator 152 then accumulates the products Y0 and Y1 obtained at the leading edge E6. The same procedure as at the leading edge E6 is performed for the sample codewords X(k-1) and X(k) at the leading edges E7 and E8. At the leading edge E9 of the timing pulse CK3, the accumulator 152 calculates the total sum of the products obtained at the leading edges E4 and E6—E8, i.e., the interpolation sample codeword Y(j). The sample codeword to be interpolated at the sampling timing Tj is obtained in this manner.

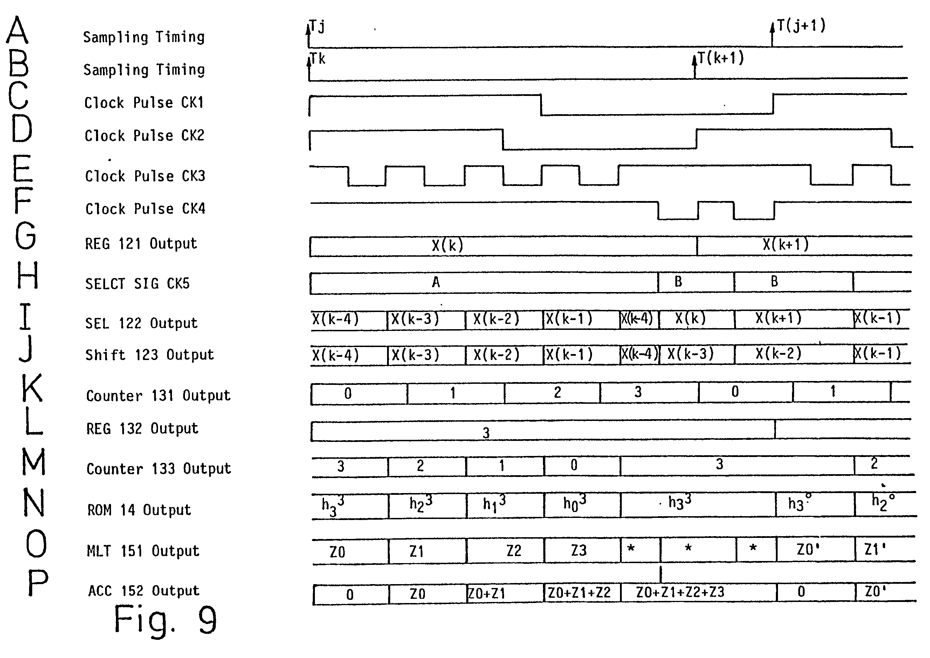

Referring to Fig. 9, each waveform is produced upon coincidence of the sampling timing Tj (Fig. 9A) with the sampling timing Tk (Fig. 9B). Turning back to Fig. 8, since the multiplication by the filter 15 is started after the leading edge of the timing pulse CK1 (Fig. 8C), no input sample codeword after the leading edge of the sampling pulse CK2 (Fig. 8D) can be stored in the shift register 123. Therefore, the storing of the input sample codeword in the register 123 takes place after the completion of the multiplication by the filter 15. Since other operations are the same as those illustrated in Fig. 8, further description will be omitted.

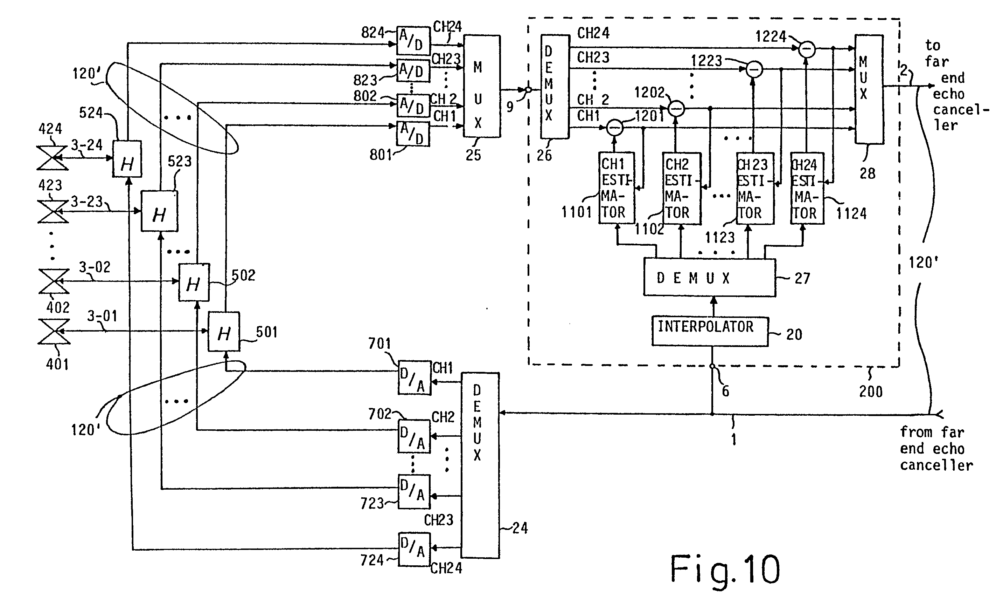

Referring to Fig. 10, another long-distance telephone network to which the present invention is applicable has local two-wire circuits 3—1 to 3—24 connected to subscriber sets 401—424, a four-wire circuit 120' made of 24-channel communication lines and hybrid circuits 501 to 524 for coupling the two-wire and four-wire circuits to each other, and a multiplexer 25 and a demultiplexer 24 for performing the multiplexing and demultiplexing to and from such communication lines 120'.

To the reception sides of the circuits 501 to 524 are connected D/A converters 701 to 724 and to the transmission sides of the circuits 501 to 524 are connected to A/D converters 801 to 824. The outputs of the A/D converters 801 to 824 are given to the circuit 120' through an echo canceller 200 of the invention designed for the 24-channel time division multiplex communication. Needless to say, there is provided at the other end of the long-distance telephone network, a combination of the circuits 3—1 to 3—24 and 120' and the echo canceller identical to the one mentioned above.

Referring to Fig. 10, the 24-channel multiplexed digital signal with the reception cycle 24 times as fast as that of the timing pulse CK2 is supplied through the digital reception side path 1 to both the reception terminal 6 of an echo canceller 200 and a demultiplexer 24. The demultiplexer 24 separates the multiplexed digital signal into the incoming digital signals corresponding to each of 24 channels. The demultiplexed signals are converted into original telephone signals by D/A converters 701 to 724 provided in one-to-one correspondence to 24 channels and supplied through hybrid circuits 501 to 524 to subscriber sets 401 to 424. All the circuits 501 to 524 produce echoes and supply them to A/D converters 801 to 824. The digitized echoes converted by the converters 801 to 824 are multiplexed by a multiplexer 25 and fed to a demultiplexer 26 through a transmission terminal 9 of the canceller 200. The multiplexed digital echo signal is separated by the demultiplier 26 into the digital echo signals corresponding to each of 24 channels.

Meanwhile, the 24-channel multiplexed digital signal given to the terminal 6 is converted into a digital signal with the sampling pulse 4CK1 by an interpolator 20 to be described hereunder. The output of the interpolator 20 is separated by a demultiplexer 27 into outputs corresponding to 24 channels, so that the separated signals are supplied to echo estimators 1101 to 1124. The echo estimators 1101 to 1124, in response to the outputs fed by the demultiplexer 27, produce estimated echoes to be sent to subtractors 1201 to 1224. Each of the subtractors 1201 to 1224 performs the subtraction between each digital echo signal from the demultiplexer 26 and each of the estimated echoes. The outputs of the subtractors 1201 to 1224 (residual echoes) are again supplied to the estimators 1101 to 1124 to bring the estimated echoes closer to the true echoes.

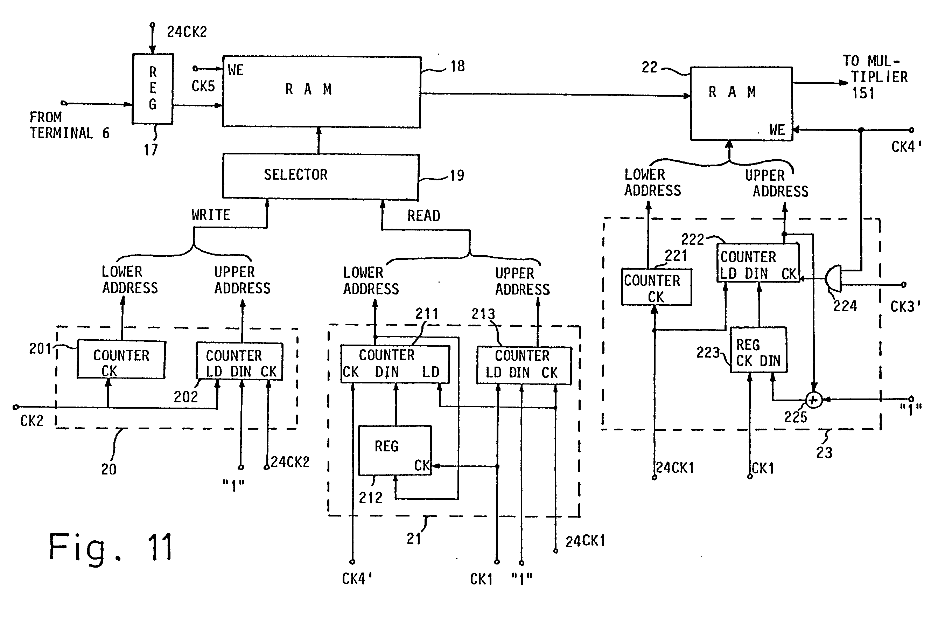

Fig. 11 shows a part of the interpolator 20 shown in Fig. 10.

Referring to Fig. 11, the 24-channel structure of the interpolator 20 corresponding to the single-channel structure (consisting of the resistor 121 and the selector 122) shown in Fig. 6 includes a register 1, a random access memory (RAM) 18, a read address generator 21, a write address generator 20, and a selector 19 for switching between these circuits 20 and 21. The RAM 18 has 24 storage areas, each corresponding to each channel to store three sample codewords X(k-1), X(k-2), and X(k-3), which have been respectively given to the terminal 6 at sampling timings T(k-1), T(K-2), and T(k-3) preceding the present sampling timing Tk. The write address generator 20 comprises counters 201 and 202. "1" is set in the counter 202 as the initial value corresponding to the channel 1 by the sampling pulse CK2. The counting-up operation of the counter 202 is performed by the sampling pulse 24CK2 24 times as fast as the sampling pulse CK2, while the counter 201 is counted up in synchronism with the sampling pulse CK2. The counter 202 generates an upper address for designating a channel number, whereas the counter 201 generates a lower address for designating one of sample codewords stored in the memory area corresponding to the channel 1. On the other hand, the read address generator 21 is made up of counters 211 and 213, and a register 212. "1" is set in the counter 213 as the initial value corresponding to the channel 1 by the sampling pulse CK1. The counting-up operation of the counter 213 is performed in response to the sampling pulse 24CK1 24 times as fast as the sampling pulse CK1, while the counter 211 is counted up by the timing pulse CK4'. The register 212 stores the output of the counter 211 in synchronism with the sampling pulse CK1. The counter 213 generates an upper address for designating a channel number, whereas the counter 211 generates a lower address for designating one of sample codewords stored in the memory area corresponding to the channel number designated by the counter 213.

Next, the 24-channel structure corresponding to the single channel (consisting of the shift register 123) shown in Fig. 6 is composed of an RAM 22 and an address generator 23 of the RAM 22. The RAM 22 has 24 storage areas, each of which corresponds to each channel, to store four sample codewords required for obtaining one interpolation value for each channel.

The address generator 23 is composed of counters 221 and 222, an adder 225, and a register 223. The counter 221 is counted up by the clock 24CK1, while counter 222 is counted up by the output of an AND gate 224. The adder 225 adds "1" to the output of the counter 222. The register 223 stores the output of the adder 225 in synchronism with the sampling pulse CK1. The counter 221 generates an upper address for designating a channel number, whereas the counter 222 generates a lower address for designating one of sample codewords stored in the memory area corresponding to the channel number. The timing pulses CK3' and CK4' respectively correspond to the timing pulses CK3 and CK4 shown in Fig. 6.

Because the digital filter 15, the coefficient circuit 14, and the address generator 13 (all for the single-channel use) illustrated in Fig. 6 can as well be used in the 24-channel structure, no further description will be made on these components.

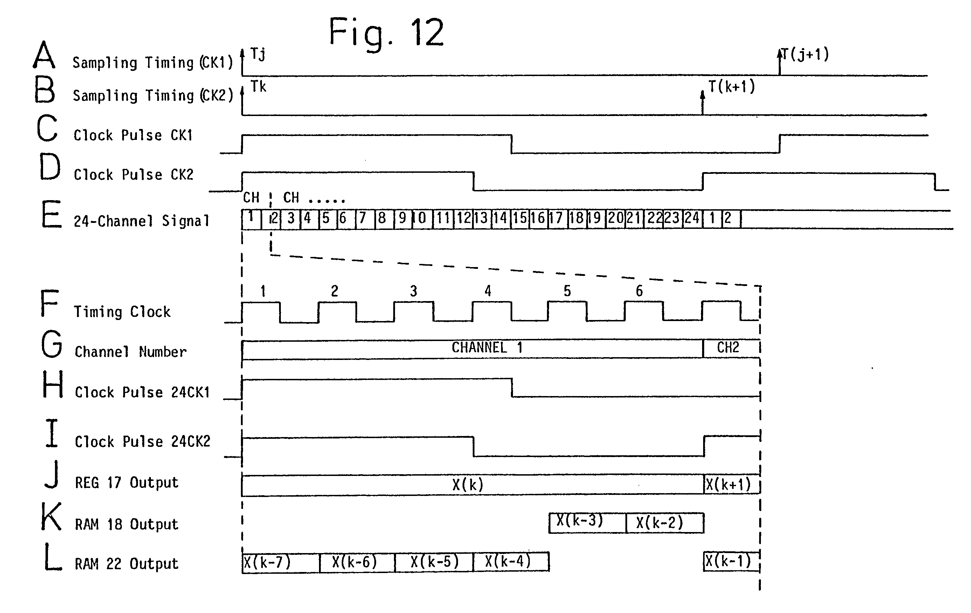

Figs. 12A to 12L show diagrams for describing the operation of the sample interpolator shown in Fig. 11. This operation will be described in detail hereunder referring to Figs. 6 and 10 assuming the state where the positional relationship between the sampling timings Tj(Fig. 12A) and Tk (Fig. 12B) is the same as that in Fig. 9.

A 24-channel time division multiplexed digital signal (Fig. 12E) is supplied to the terminal 6 in each period equal to one twenty-fourth of one sampling period. At timing pulse 1 (Fig. 12F), the sample codeword X(k) on the channel 1 (Fig. 12E, 12G) fed to the terminal 4 is stored in the register 17 in synchronism with the sampling pulse 24CK2 (Fig. 12I). At this time, since the write address generator 20 gives an address designating the channel 1 to the RAM 18 via the selector 19, the output X(k) Fig. 12J) of the register 17 is stored in the memory area corresponding to the channel 1 of the RAM 18. Further, at the timing pulse 1, the counters 221 and 222 give the RAM 35 an address "1" for designating the channel 1 and an address "0" for designating the 0-th sample on the channel 1, respectively, so that the RAM 22 gives the sample codeword (X(k-7) (Fig. 12L) to the multiplier 151 (Fig. 6). Meanwhile, the coefficient circuit 14 (Fig. 6), in response to the address from the address generator 13 (Fig. 6), supplies the multiplier 151 with a coefficient $h_3{}^3$ corresponding to the 0-th sample codeword on the channel 1. The sample codeword (X(k-7) multiplied by the coefficient $h_3{}^3$ at the multiplier 151 is given to the accumulator 152.

At timing pulses 2 to 4, the sample codewords X(k-6), X(k-5), and X(k-4) stored in the memory area corresponding to the channel 1 in the RAM 22 are read and supplied to the multiplier 151. Each of the sample codewords X(k-6), X(K-5), and X(k-4) multiplied by the corresponding coefficients $h_2{}^3$, $h_1{}^3$, and $h_0{}^3$, respectively is fed to the accumulator 152. The sample value to be interpolated on the channel 1 is determined in this manner. Next, at timing pulses 5 and 6, the oldest sample codewords X(k-7) and X(k-6) on the channel 1 are replaced with the next sample codewords X(k-3) and X(k-2) (Fig. 12K) so as to obtain a value to be interpolated at the next sampling timing for the channel 1. The same procedure is applied to the channels 2 to 24. Although the sample interpolators 10 and 20 are connected to the terminal 6 in the foregoing embodiments, they may be connected to the terminal 9.

Many alternatives and modifications to the above-described embodiments can be easily made within the scope of the invention defined by the appended claims.

## Claims

1. An echo canceller (100; 200) for speech signal transmission for use in a long-distance telephone network having a four-wire circuit (120; 120') and a two-wire circuit (3; 3—1 to 3—24), and responsive to an incoming digital signal supplied from the reception-side path (1) of said four-wire circuit (120; 120') and to an unprocessed digital signal including a digital echo signal supplied to the input of the transmission-side path (2) with an outgoing digital signal substantially free from said digital echo signal, said digital echo signal being inevitably produced at the junction (5; 501 to 524) of the four-wire circuit (120; 120') and the two-wire circuit (3; 3—1 to 3—24) wherein the echo canceller comprises:

a) an echo estimator (11; 1101 to 1124) for producing an estimated echo signal to cancel said echo signal; and

b) means (12; 1201 to 1224) for subtracting the estimated echo signal from the unprocessed digital signal to produce an echo cancelled digital signal, characterised in that

c) said incoming and outgoing digital signals have mutually different sampling rates, and that

d) said echo canceller (100; 200) further comprises:

a sample interpolator (10; 20) for converting said incoming digital signal into a digital signal having the same sampling rate as that of the outgoing digital signal, each sample of said converted digital signal assuming a value determined on the basis of relative positions of samplings timings of the incoming and outgoing digital signals;

and wherein the output of the sample interpolator is supplied to the echo estimator.

2. An echo canceller (100; 200) for speech signal transmission for use in a long-distance telephone network having a four-wire circuit (120; 120') and a two-wire circuit (3; 3—1 to 3—24), and responsive to an incoming digital signal supplied from the reception-side path (1) of said four-wire circuit (120; 120') and to an unprocessed digital signal including a digital echo signal supplied to the input of the transmission-side path (2) with an outgoing digital signal substantially free from said digital echo signal, said digital echo signal being inevitably produced at the junction (5; 501 to 504) of the four-wire circuit (120; 120') and the two-wire circuit (3; 3—1 to 3—24) wherein the echo canceller comprises:

a) an echo estimator (11; 1101 to 1124) for producing an estimated echo signal to cancel said echo signal; and

b) means (12; 1201 to 1204) for subtracting the estimated echo signal from the unprocessed digital signal to produce an echo cancelled digital signal, characterised in that

c) said incoming and outgoing digital signals have mutually different sampling rates, and that

d) said echo canceller (100; 200) further comprises: a sample interpolator (10; 20) for converting said unprocessed digital signal into a digital signal having the same sampling rate as that of the incoming digital signal, each sample of said converted digital signal assuming a value determined on the basis of relative positions of sampling timings of the incoming and unprocessed digital signals;

and wherein the output of the sample interpolator is supplied to the echo estimator.

3. An echo canceller according to claim 1 or 2, characterised in that the sample interpolator (10) comprises a transversal filter (15) having an input terminal for receiving the incoming digital signal through the terminal (6) and an output terminal connected to the estimator (11), a read-only memory (140) for storing the four coefficient groups of the filter (15), and an address generator (130) for generating an address for accessing the ROM (140).

4. An echo canceller according to claim 3, characterized in that the filter (15) comprises three delay elements (1515) to 1517), four multipliers (1510 to 1513), and an adder (1514) for adding up the outputs of the multipliers (1510 to 1513).

5. An echo canceller according to claim 3 or 4, characterised in that the generator (130) comprises a counter (1301) and a register (1302), the counter (1301) cleared by a sampling pulse CK2 performing the counting-up operation by a timing pulse 4×CK2 having the repetition cycle four times as fast as that of the sampling pulse CK2, and the register (1302) storing the output of the counter (1301) in response to the sampling pulse CK1 to give an upper address for the ROM (140), the lower addresses being fixedly given to the ROM (140) as constant values.

6. An echo canceller according to claim 1 or 2, characterised in that the interpolator (10) comprises a digital filter (15) having a multiplier (151) and an accumulator (152), a coefficient circuit (14) made up of a read-only memory (ROM) for storing the coefficients of the filter (15), a circuit (124) for supplying sample codewords to the digital filter (15), an address generator (13) for producing address for accessing the coefficient circuit (14), and a timing pulse generator (16) for generating pulses to control these circuits (124), (13), and (15).

7. An echo canceller according to claim 6, characterised in that the circuit (124) comprises a register (121) for storing input sample codewords in response to a sampling pulse CK2, a selector (122) for receiving the output of the register (121) at an input terminal B and the output of a shift register (123) at an input terminal A to select either the register (121) or the shift register (123) with a timing pulse CK5, and the four-stage shift register (123) for sequentially shifting the output of the selector (122) in response to timing pulses CK3 and CK4.

8. An echo canceller according to claim 6 or 7, characterised in that the timing pulse generator (16) comprises a part (160) comprising a four-stage shift register (161), an OR gate (162), a delayed-type flip-flop (163), an AND gate (164), and a monostable multivibrator (165) so as to generate timing pulses CK3 and CK4.

9. An echo canceller according to any of claims 1 to 8, characterised in that the echo canceller (200) is designed for 24-channel time division multiplex communication.

10. An echo canceller according to claim 9, characterised in that the interpolator (20) has a 24-channel structure and comprises a register (17), a random access memory (18), a read address generator (21), a write address generator (20), a selector (19) for switching between these circuits (20) and (21), and another random access memory (22) with an address selector (23).

**Patentansprüche**

1. Echounterdrücker (100; 200) zur Sprachsignalübertragung für ein Fernsprechnetz mit langen Entfernungen, mit einem Vierdrahtschaltkreis (120, 120′) und einen Zweidrahtschaltkreis (3; 3—1 bis 3—24), der auf ein von der Empfangsseitenleitung (1) des Vierdrahtschaltkreises (120; 120′) geliefertes ankommendes digitales Signal und auf ein dem Eingang der Sendeseitenleitung (2) zugeführtes, ein digitales Echosignal aufweisendes, unverarbeitetes digitales Signal anspricht, wobei ein austretendes digitales Signal im wesentlichen frei vom digitalen Echosignal ist, wobei das digitale Echosignal unvermeidbar am Verbindungspunkt (5; 501 bis 524) des Vierdrahtschaltkreises (120; 120′) und des Zweidrahtschaltkreises (3; 3—1 bis 3—24) erzeugt wird, wobei der Echounterdrücker aufweist:

a) ein Echoabschätzglied (11; 1101 bis 1124), das ein geschätztes Echosignal zum Unterdrücken des Echosignals erzeugt; und

b) eine Einrichtung (12; 1201 bis 1224) zum Subtrahieren des geschätzten Echosignals vom unverarbeiteten digitalen Signal, um ein echounterdrücktes digitales Signal zu erzeugen, dadurch gekennzeichnet, daß

c) das ankommende und das austretende digitale Signal unterschiedliche Abtastraten aufweisen, und daß

d) der Echounterdrücker (100; 200) ferner aufweist:

einen Abtastinterpolator (10; 20) zum Umwandeln des ankommenden digitalen Signals in ein digitales Signal mit derselben Abtastrate wie das austretende digitale Signal, wobei jeder Abtastwert des umgewandelten digitalen Signals einen Wert annimmt, der auf der Grundlage von Relativpositionen von Abtastzeiten des ankommenden und des austretenden digitalen Signals bestimmt wird; und wobei der Ausgang des Abtastinterpolators am Echoabschätzglied anliegt.

2. Echounterdrücker (100; 200) zur Sprachsignalübertragung für ein Fernsprechnetz mit langen Entfernungen, mit einem Vierdrahtschaltkreis (120; 120′) und einem Zweidrahtschaltkreis (3; 3—1 bis 3—24), der auf ein von der Empfangsseitenleitung (1) des Vierdrahtschaltkreises (120; 120′) geliefertes ankommendes digitales Signal und auf ein dem Eingang der Sendeseitenleitung (2) zugeführtes, ein digitales Echosignal aufweisendes, unverarbeitetes digitales Signal anspricht, wobei ein austretendes digitales Signal im wesentlichen frei vom digitalen Echosignal ist, wobei das digitale Echosignal unvermeidbar am Verbindungspunkt (5; 501 bis 524) des Vierdrahtschaltkreises (120; 120′) und des Zweidrahtschaltkreises (3; 3—1 bis 3—24) erzeugt wird, und wobei der Echounterdrücker aufweist:

a) ein Echoabschätzglied (11; 1101 bis 1124), das ein geschätztes Echosignal zum Unterdrücken des Echosignals erzeugt; und

b) eine Einrichtung (12; 1201 bis 1204) zum Subtrahieren des geschätzten Echosignals vom unverarbeiteten digitalen Signal, um ein echounterdrücktes digitales Signal zu erzeugen, dadurch gekennzeichnet, daß

c) das ankommende und das austretende digi-tale Signal unterschiedliche Abtastraten aufwei-sen, und daß

d) der Echounterdrücker (100; 200) ferner aufweist:

einen Abtastinterpolator (10; 20) zum Umwan-deln des unverarbeiteten digitalen Signals in ein digitales Signal mit derselben Abtastrate wie das ankommende digitale Signal, wobei jeder Abtastwert des umgewandelten digitalen Signals einen Wert annimmt, der auf der Grundlage von Relativpositionen von Abtastzeiten des ankommenden und des unverarbeiteten digitalen Signals bestimmt wird; und wobei der Ausgang des Abtastinterpolators am Echoabschätzglied anliegt.

3. Echounterdrücker nach Anspruch 1 oder 2, dadurch gekennzeichnet, daß der Abtastinterpolator (10) ein Transversalfilter (15) mit einem Eingangsanschluß zum Empfangen des ankommenden digitalen Signals über den Anschluß (6) und einem mit dem Abschätzglied (11) verbundenen Ausgangsanschluß, einen Festwertspeicher (140) zum Speichern der vier Koeffizientengruppen des Filters (15) und einen Adressengenerator (130) zum Erzeugen einer Adresse zum Zugriff auf den Festwertspeicher (140) aufweist.

4. Echounterdrücker nach Anspruch 3, dadurch gekennzeichnet, daß das Filter (15) drei Verzögerungselemente (1515 bis 1517), vier Multiplizierer (1500 bis 1513) und einen Addierer (1514) zum Aufsummieren der Ausgänge der Multiplizierer (1510 bis 1513) aufweist.

5. Echounterdrücker nach Anspruch 3 oder 4, dadurch gekennzeichnet, daß der Generator (130) einen Zähler (1301) und ein Register (1302) aufweist, wobei der Zähler (1301) von einem Abtastimpuls CK2 freigegeben wird, der das Vorwärts-zählen durch einen Zeitimpuls 4×CK2 durchführt, dessen Folgezyklus viermal schneller ist als derjenige des Abtastimpulses CK2, und wobei das Register (1302) als Antwort auf den Abtastimpuls CK1 den Ausgang des Zählers (1301) speicher, um eine obere Adresse für den Festwertspeicher (140) zu erhalten, wobei die unteren Adressen dem Festwertspeicher (140) als konstante Werte fest vorgegeben sind.

6. Echounterdrücker nach Anspruch 1 oder 2, dadurch gekennzeichnet, daß der Interpolator (10) ein Digitalfilter (15) mit einem Multiplizierer (151) und einem Akkumulator (152), einen aus einem Festspeicher (ROM) zum Speichern der Koeffizienten des Filters (15) bestehenden Koeffizientenschaltkreis (14), einen Schaltkreis (124) zum Zuführen von Abtast-Codewörtern zum Digitalfilter (15), einen Adressengenerator (13) zum Erzeugen von Adressen zum Zugriff auf den Koeffizientenschaltkreis (14) und einen Zeitimpulsgenerator (16) zum Erzeugen von Impulsen zum Steuern der Schaltkreise (124, 13 und 15) aufweist.

7. Echounterdrücker nach Anspruch 6, dadurch gekennzeichnet, daß der Schaltkreis (124) ein Register (121) zum Speichern von eingehenden Abtast-Codewörtern als Antwort auf einen Abtastimpuls CK2, einen Wähler (122) zum Empfangen des Ausgangs des Registers (121) an einem Eingangsanschluß B und des Ausgangs eines Schieberreigisters (123) an einem Eingangsanschluß A zum Auswählen entweder des Registers (121) oder des Schieberrigsters (123) mit einem Zeitimpuls CK5, und das vierstufige Schieberegister (123) zum sequentiellen Verschieben des Ausgangs des Wählers (122) als Antwort auf Zeitimpulse CK3 und CK4 aufweist.

8. Echounterdrücker nach Anspruch 6 oder 7, dadurch gekennzeichnet, daß der Zeitimpulsgenerator (16) ein Bauteil (160) mit einem vierstufigen Schieberegister (161, einem ODER-Gatter (162), einem verzögerten Flip-Flop (163), einem AND-Gatter (164) und einem monostabilen Multivibrator (165) aufweist, um die Zeitimpulse CK3 und CK4 zu erzeugen.

9. Echounterdrücker nach einem der Ansprüche 1 bis 8, dadurch gekennzeichnet, daß der Echounterdrücker (200) für 24-Kanal-Zeitmultiplex-Datenübertragung ausgelegt ist.

10. Echounterdrücker nach Anspruch 9, dadurch gekennzeichnet, daß der Interpolator (20) eine 24-Kanal-Struktur hat und ein Register (17), einen Speicher (18) mit direktem zugriff, einen Leseadressengenerator (21), einen Schreibadressengenerator (20), einen Wähler (19) zum Umschalten zwischen den beiden Generatoren (20 und 21) und einen weiteren Speicher (22) mit direktem Zugriff mit einem Adressenwähler (23) aufweist.

**Revendications**

1. Annuleur d'échos (100; 200) pour la transmission de signaux vocaux pour emploi dans un réseau téléphonique à longue distance comportant un circuit quatre fils (120; 120') et un circuit deux fils (3; 3—1 à 3—24) et pouvant répondre à un signal numérique d'entrée provenant du trajet côté de réception (1) du circuit quatre fils (120; 120') et à un signal numérique non traité comportant un signal numérique d'écho fourni à l'entrée du trajet côté de transmission (2) avec un signal numérique de sortie sensiblement exempt du signal numérique d'echo, ce signal numérique d'écho étant inévitablement produit à la jonction (5; 501 à 524) du circuit quatre fils (120; 120') et du circuit à deux fils (3; 3—1 à 3—24), où l'annulateur d'échos comprend:
a) un estimateur d'échos (11; 1101 à 1124) pour produire un signal d'écho estimé afin d'annuler le signal d'écho; et
b) un moyen (12; 1201 à 1224) pour soustraire le signal d'écho estimé du signal numérique non traité afin de produire un signal numérique annulé d'écho, caractérisée en ce que:
c) les signaux numériques d'entrée et de sortie ont des taux d'échantillonnage mutuellement différents, et en ce que:

d) l'annuleur d'écho (100; 200) comporte en outre: un interpolateur d'échantillon (10; 20) pour convertir le signal numérique d'entrée en signal numérique ayant le même taux d'échantillonnage que celui du signal numérique de sortie, chaque échantillon du signal numérique converti assumant une valeur déterminée sur la base des positions relatives des séquencements d'échantillonnage des signaux numériques d'entrée et de sortie; et où la sortie de l'interpolateur d'échantillon est fournie à l'estimateur d'échos.

2. Annuleur d'échos (100; 200) pour la transmission de signaux vocaux pour emploi dans un réseau téléphonique à longue distance comportant un circuit quatre fils (120; 120') et un circuit deux fils (3; 3—1 à 3—24), et pouvant répondre à un signal numérique d'entrée provenant du trajet côté de réception (1) du circuit quatre fils (120; 120') et à un signal numérique non traité comportant un signal numérique d'écho fourni à l'entrée du trajet côté de transmission (2) avec un signal numérique de sortie sensiblement exempt du signal numérique d'écho, le signal numérique d'écho étant inévitablement produit à la jonction (5; 501 à 504) du circuit quatre fils (120; 120') et du circuit deux fils (3; 3—1 à 3—24), où l'annuleur d'échos comprend:
a) un estimateur d'échos (11, 1101 à 1124) pour produire un signal d'écho estimé afin d'annuler le signal d'écho; et
b) un moyen (12; 1201 à 1204) pour soustraire le signal d'écho estimé du signal numérique non traité afin de produire un signal numérique annulé en écho, caractérisé en ce que:
c) les signaux numériques d'entrée et de sortie ont des taux d'échantillonnage mutuellement différents, et en ce que:
d) l'annuleur d'échos (100; 200) comporte en outre: un interpolateur d'échantillon (10; 20) pour convertir le signal numérique non traité en signal numérique ayant le même taux d'échantillonnage que celui du signal numérique d'entrée, chaque échantillon du signal numérique converti assumant une valeur déterminée sur la base des positions relatives des séquencements d'échantillonnage des signaux numériques d'entrée et non traités et où la sortie de l'interpolateur d'échantillon est fournie à l'estimateur d'échos.

3. Annuleur d'échos selon la revendication 1 ou la revendication 2, caractérisé en ce que l'interpolateur d'échantillon (10) comprend un filtre transversal (15) ayant une borne d'entrée destinée à recevoir le signal numérique d'entrée par l'intermédiaire de la borne (6) et une borne de sortie connectée à l'estimateur (11), une mémoire morte (140) pour stocker les quatre groupes de coefficients du filtre (15), et un générateur d'adresses (130) pour générer une adresse pour accéder à la mémoire morte (140).

4. Annuleur d'échos selon la revendication 3, caractérisé en ce que le filtre (15) comprend trois éléments à retard (1515 à 1517), quatre multiplicateurs (1510 à 1513) et un additionneur (1514) pour additionner les sorties des multiplicateurs (1510 à 1513).

5. Annuleur d'échos selon la revendication 3 ou 4, caractérisé en ce que le générateur (130) comprend un compteur (1301) et un registre (1302), le compteur (1301) remis à zéro par une impulsion d'échantillonnage CK2 exécutant l'opération de comptage par une impulsion de séquencement 4×CK2 ayant le cycle de répétition quatre fois aussi rapide que celui de l'impulsion d'échantillonnage CK2, et le registre (1302) stockant la sortie du compteur (1301) en réponse à l'impulsion d'échantillonnage CK1 pour donner une adresse supérieur pour la mémoire morte (140), les adresses inférieures étant données de façon fixe à la mémoire morte (140) en tant que valeurs constantes.

6. Annuleur d'échos selon la revendication 1 ou la revendication 2, caractérisé en ce que l'interpolateur (10) comprend un filtre numérique (15) ayant un multiplicateur (151) et un accumulateur (152), un circuit de coefficient (14) constitué d'une mémoire morte (ROM) pour stocker les coefficients du filtre (15), un circuit (124) pour fournir des mots de code d'échantillon au filtre numérique (15), un générateur d'adresses (13) pour produire une adresse pour accéder au circuit de coefficient (14), et un générateur d'impulsions de séquencement (16) pour générer des impulsions pour commander ces circuits (124), (13) et (15).

7. Annuleur d'échos selon la revendication 6, caractérisé en ce que le circuit (124) comprend un registre (121) pour stocker des mots de code d'échantillon d'entrée en réponse à une impulsion d'échantillonnage CK2, un sélecteur (122) pour recevoir la sortie du registre (121) à une borne d'entrée B et la sortie d'u'n registre de décalage (123) à une borne d'entrée A de manière à sélectionner soit le registre (121) soit le registre à décalage (123) avec une impulsion de synchronisation CK5, et le registre à décalage à quatre étages (123) pour décaler séquentiellement la sortie du sélecteur (122) en réponse aux impulsions de séquencement CK3 et CK4.

8. Annuleur d'échos selon la revendication 6 ou la revendication 7, caractérisé en ce que le générateur (16) d'impulsions de séquencement comprend une partie (160) comportant un registre à décalage à quatre étages (161), une porte OU (162), une bascule du type à retard (163), une porte ET (164), et un multivibrateur monostable (165) de manière à générer les impulsions de séquencement CK3 et CK4.

9. Annuleur d'échos selon l'une quelconque des revendications 1 à 8, caractérisé en ce que l'annuleur d'échos (200) est conçu pour une communication à multiplexage à répartition dans le temps à 24 voies.

10. Annuleur d'échos selon la revendication 9, caractérisé en ce que l'interpolateur (20) a une structure à 24 voies et comporte un registre (17), une mémoire à accès direct (18), un générateur d'adresses de lecture (21), un générateur d'adresses d'écriture (20), un sélecteur (19) pour la commutation entre ces circuits (20) et (2), et une autre mémoire à accès direct (22) avec un sélecteur d'adresses (23).

Fig. 1

Fig. 2A — Sampling Pulse CK2

Fig. 2B — Imaginary Decoded Sample Codeword X(iT)

Fig. 2C — Approximated Sample Codeword Y(iT)

Fig. 2D — Sampling Pulse CK1

EP 0 048 979 B2

Fig. 3

# Fig. 4

| UPPER ADDRESS | LOWER ADDRESS | CONTENTS | |
|---|---|---|---|
| 00 | 00 | $h_0^0$ | |
| | 10 | $h_1^0$ | |
| | 01 | $h_2^0$ | HO |
| | 11 | $h_3^0$ | |
| 10 | 00 | $h_0^1$ | |
| | 10 | $h_1^1$ | |
| | 01 | $h_2^1$ | H1 |
| | 11 | $h_3^1$ | |
| 01 | 00 | $h_0^2$ | |
| | 10 | $h_1^2$ | |
| | 01 | $h_2^2$ | H2 |
| | 11 | $h_3^2$ | |
| 11 | 00 | $h_0^3$ | |
| | 10 | $h_1^3$ | |
| | 01 | $h_2^3$ | H3 |
| | 11 | $h_3^3$ | |

A — SAMPLING TIMING (CK1) $T_j$   $T(j+1)$   $T(j+2)$

B — SAMPLING TIMING (CK2)   $T_k$   $k$   $T(k+1)$   $T(k+2)$   $T(k+3)$   IA | IB | IC | ID

C — CLOCK PULSE CK1

D — CLOCK PULSE CK2

E — COUNTER 1301 OUTPUT   0 | 1 | 2 | 3 | 0 | 1 | 2 | 3 | 0 | 1 | 2 | 3 | 0 | 1 | 2 | 3

F — REG 1302 OUTPUT   0   1   2

G — ROM 140 OUTPUT   $H0\ (h_0^0 \sim h_3^0)$   $H1\ (h_0^1 \sim h_3^1)$   $H2\ (h_0^2 \sim h_3^2)$

H — ADDER 1514 OUTPUT

$$Y(j) = \sum_{i=0}^{3} h_i^0 \cdot X(k-i)$$

$$Y(j+1) = \sum_{i=0}^{3} h_i^1 \cdot X(k-i+1)$$

$$Y(j+2) = \sum_{i=0}^{3} h_i^2 \cdot X(k-i+2)$$

I — INPUT SAMPLE   $X(k)$ | $X(k+1)$ | $X(k+2)$ | $X(k+3)$

## Fig. 5

Fig. 6

Fig. 7

Fig.8A

| | Signal | Waveform / values |
|---|---|---|
| A | Sampling Timing (CK1) | $T_j$ ... $T(j+1)$ |
| B | Sampling Timing (CK2) | $T_k$ ... $T(k+1)$ |
| C | Clock Pulse CK1 | E4 |
| D | Clock Pulse CK2 | E1 |
| E | Clock Pulse CK3 | E5 E6 E7 E8 E9 |
| F | Clock Pulse CK4 | E2 E3 |
| G | Reg 121 Output | $X(k)$ \| $X(k+1)$ |
| H | SELCT SIG CK5 | $A$ \| $B$ \| $A$ \| $B$ \| $A$ |
| I | SEL 122 Output | $X(k-4)$ \| $X(k)$ \| $X(k-3)$ \| $X(k-2)$ \| $X(k-1)$ \| $X(k)$ \| $X(k-3)$ \| $X(k+1)$ \| $X(k-2)$ \| $X(k-1)$ \| $X(k)$ |
| J | Shift 123 Output | $X(k-4)$ \| $X(k-3)$ \| $X(k-2)$ \| $X(k-1)$ \| $X(k)$ \| $X(k-3)$ \| $X(k-2)$ \| $X(k-1)$ \| $X(k)$ |
| K | Counter 131 Output | 0 \| 1 \| 2 \| 3 \| 0 \| 1 \| 2 |
| L | REG 132 Output | 3 \| 0 \| 1 |
| M | Counter 133 Output | 3 \| 2 \| 1 \| 0 \| 3 \| 2 |
| N | ROM 14 Output | $h_3^0$ \| $h_2^0$ \| $h_1^0$ \| $h_0^0$ \| $h_3^0$ \| $h_3^1$ \| $h_2^1$ |
| O | MLT 151 Output | $Y0$ \| $Y1$ \| $Y2$ \| $Y3$ \| $*$ \| $Y0'$ \| $Y1'$ |
| P | ACC 152 Output | 0 \| $Y0$ \| $Y0+Y1$ \| $Y0+Y1+Y2$ \| $Y0+Y1+Y2+Y3$ \| 0 \| $Y0'$ |

EP 0 048 979 B2

EP 0 048 979 B2

| | | |
|---|---|---|
| A | Sampling Timing | Tj ... T(j+1) |
| B | Sampling Timing | Tk ... T(k+1) |
| C | Clock Pulse CK1 | |
| D | Clock Pulse CK2 | |
| E | Clock Pulse CK3 | |
| F | Clock Pulse CK4 | |
| G | REG 121 Output | X(k) / X(k+1) |
| H | SELCT SIG CK5 | A / B / B |
| I | SEL 122 Output | X(k-4) | X(k-3) | X(k-2) | X(k-1) | X(k-4) | X(k) | X(k+1) | X(k-1) |
| J | Shift 123 Output | X(k-4) | X(k-3) | X(k-2) | X(k-1) | X(k-4) | X(k-3) | X(k-2) | X(k-1) |
| K | Counter 131 Output | 0 | 1 | 2 | 3 | 0 | 1 |
| L | REG 132 Output | 3 |
| M | Counter 133 Output | 3 | 2 | 1 | 0 | 3 | 2 |
| N | ROM 14 Output | $h_3^3$ | $h_2^3$ | $h_1^3$ | $h_0^3$ | $h_3^3$ | $h_3^0$ | $h_2^0$ |
| O | MLT 151 Output | Z0 | Z1 | Z2 | Z3 | * | * | * | Z0' | Z1' |
| P | ACC 152 Output | 0 | Z0 | Z0+Z1 | Z0+Z1+Z2 | Z0+Z1+Z2+Z3 | 0 | Z0' |

Fig. 9

Fig.10

EP 0 048 979 B2

Fig. 11

EP 0 048 979 B2

# Fig. 12

| | | |
|---|---|---|
| A | Sampling Timing (CK1) | |
| B | Sampling Timing (CK2) | |
| C | Clock Pulse CK1 | |
| D | Clock Pulse CK2 | |
| E | 24-Channel Signal | |
| F | Timing Clock | |
| G | Channel Number | |
| H | Clock Pulse 24CK1 | |
| I | Clock Pulse 24CK2 | |
| J | REG 17 Output | |
| K | RAM 18 Output | |
| L | RAM 22 Output | |

A — Sampling Timing (CK1): $T_j$ ... $T(j+1)$

B — Sampling Timing (CK2): $T_k$ ... $T(k+1)$

E — 24-Channel Signal: CH CH ..... 1 2 3 4 5 6 7 8 9 10 11 12 13 14 15 16 17 18 19 20 21 22 23 24 1 2

F — Timing Clock: 1 2 3 4 5 6

G — Channel Number: CHANNEL 1 | CH2

J — REG 17 Output: $X(k)$ | $X(k+1)$

K — RAM 18 Output: $X(k-3)$ | $X(k-2)$

L — RAM 22 Output: $X(k-7)$ | $X(k-6)$ | $X(k-5)$ | $X(k-4)$ | $X(k-1)$

EP 0 048 979 B2